# EUROPÄISCHE PATENTSCHRIFT

(11) **EP 2 154 523 B1**
(45) Veröffentlichungstag und Bekanntmachung des Hinweises auf die Patenterteilung: **27.03.2013**
(21) Anmeldenummer: 08161855.5
(22) Anmeldetag: 05.08.2008
(51) Int. Cl.: G01N 27/403, G01N 27/36

(54) **Potentiometrische pH-Einstabmesskette und Verfahren zur kontinuierlichen Füllstandsüberwachung**
Potentiometric pH single rod chain and method for continuous fill state monitoring
Chaîne de mesure du pH potentiométrique à une tige et procédé de surveillance continue du niveau de remplissage

(43) Veröffentlichungstag der Anmeldung: 17.02.2010
(73) Patentinhaber: Hamilton Bonaduz AG, 7402 Bonaduz (CH)
(72) Erfinder: Schönfuss, Dirk, CH-7015 Tamins (CH); Willi, Louis, CH-7402 Bonaduz (CH); Arquint, Philipp, CH-7402 Bonaduz (CH)
(74) Vertreter: Ziebig, Marlene

(56) Entgegenhaltungen:
- EP-A- 1 643 242
- EP-A- 1 936 366
- US-A1- 2003 132 755

## Beschreibung

Die Erfindung betrifft eine potentiometrische pH-Einstabmesskette, die für elektrochemische Konzentrationsbestimmungen in Lösungen geeignet ist. Die Erfindung betrifft ferner ein die Einstabmesskette umfassendes Messsystem sowie ein Verfahren zur kontinuierlichen Füllstandsüberwachung.

### Stand der Technik

Fast alle in Flüssigkeiten operierenden elektrochemischen Sensoren benötigen ein möglichst stabiles Referenzelektrodenpotential. Insbesondere trifft dies auf potentiometrische Sensoren, wie z.B. pH - Sensoren zu. Hier hängt die Qualität des Messergebnisses ganz besonders von der Richtigkeit und Stabilität des Referenzpotentials ab. Aus praktischen Gründen wird die pH - Messung häufig mit Einstabmessketten ausgeführt, welche aus einer Referenzhalbzelle mit einer Referenzelektrode, welche sich in einem Referenzelektrolyten befindet, wobei letzterer wiederum über eine Überführung, meist ein Diaphragma, elektrisch leitend mit dem Messgut verbunden ist, und einer zweiten Glasmembranhalbzelle, welche eine elektrische Ableitung in einem Innenpuffer beinhaltet, deren elektrische Verbindung zum Messgut jedoch über eine pH - sensitive Glasmembran erfolgt. Die beiden Halbzellen sind gewöhnlich durch konzentrischen Aufbau zu einer Platz sparenden Einstabmesskette vereint. Derartige Einstabmessketten finden häufig bei der Überwachung und Steuerung von chemischen oder mikrobiologischen Prozessen ihre Anwendung.

Die Verschmutzung des Diaphragmas durch das Messgut sowie dessen unkontrolliertes Eindringen in den Elektrolyten der Referenzhalbzelle stellen eine der häufigsten Ursachen für fehlerhafte Messungen oder den Ausfall der Messkette dar. Dem wird zum Teil durch Beaufschlagung der Referenzhalbzeile mit einem Innendruck, der den Elektrolyten zu einem ständigen Ausfluss durch das Diaphragma bewegt, entgegengewirkt. Notwendigerweise muss der Referenzelektrolyt dabei kontinuierlich oder zumindest in zeitlichen Abständen in der Halbzelle aufgefüllt werden.

Die Überwachung des Füllstandes ist umständlich oder bisweilen unmöglich. Derzeit wird zur Überwachung des Diaphragmas der Widerstand zwischen der Referenzelektrode innerhalb der Referenzhalbzelle und einer ausserhalb dieser im Messmedium befindlichen Elektrode gemessen. Diese muss entweder außen an der Messkette angebracht und kontaktiert oder separat ins Messgut eingeführt werden. Die Wirkungsweise ist hinreichend bekannt (z.B. Galster, Helmuth, "pH-Messung: Grundlagen, Methoden, Anwendung, Geräte", Weinheim, VCH 1990). Die Überwachung des Füllstandes und des Diaphragmas der Referenzelektrode macht im Falle einer pH-Einstabmesskette nur bei intakter Glaselektrode Sinn. Die Prüfung auf deren Funktionstüchtigkeit erfolgt üblicherweise durch die Messung der Steilheit und Asymmetrie bei der Kalibration und des Widerstandes der pH-Glasmembran während des Einsatzes. Dazu wird der Widerstand zwischen der elektrischen Ableitung der pH-Glasmembranhalbzelle und einer Bezugselektrode, welche auch die Referenzelektrode der Referenzhalbzelle sein kann, gemessen. Die dabei mitgemessenen Widerstände von Elektrolyt, Diaphragma sowie die Polarisationswiderstände der Referenzelektroden selbst fallen nicht ins Gewicht, da sie um Größenordnungen kleiner als der Widerstand der Glasmembran sind. Wenn der Elektrolyt in der Referenzhalbzelle allerdings unter das Niveau der Referenzelektrode sinkt, kann der dann gemessene Widerstand deutlich verfälscht sein. Dies kann insbesondere bei Einstabmessketten der Fall sein, da bei diesen i.d.R. die Referenzelektrode aus Platzgründen oberhalb des Diaphragmas endet. Der auf die beschriebene Weise gemessene Glaswiderstand kann ebenfalls bei einem völlig undurchlässigen Diaphragma verfälscht sein. Abhilfe gegen derartige Fehlmessungen kann zwar wiederum die Einbeziehung einer extern angebrachten Gegenelektrode in das Messsystem leisten, um jedoch die Ursache von Fehlmessungen eindeutig einzugrenzen, ist eine Füllstandsüberwachung des Referenzelektrolyten gerade bei Einstabmessketten wünschenswert.

Um diesem Problem abzuhelfen, ist in der EP 1643242B1 eine Referenzhalbzelle für potentiometrische Messungen beschrieben, in der der Füllstand der Referenzhalbzelle mit Referenzelektrolyten mit Hilfe der Widerstandsmessung zwischen zwei im Elektrolytraum in unterschiedlicher Höhe untergebrachten Kontaktelementen erfolgt. Dabei befindet sich ein Kontaktelement unter und das andere in einem gewissen Abstand über dem Diaphragma. Sinkt der Referenzelektrolyt unter ein bestimmtes Niveau, so dass das höher stehende der beiden Kontaktelemente keinen Kontakt mehr zum Elektrolyten hat, wird der Widerstand zwischen den Kontaktelementen unendlich groß, da diese nicht mehr leitfähig über den Elektrolyten verbunden sind. Diese drastische Widerstandsänderung kann nun erfasst und ein Überwachungssignal generiert werden, welches einen zu geringen Füllstand anzeigt und das Auffüllen mit Elektrolyten auslöst. Die in EP 1643242B1 beschriebene Referenzelektrode kann ergänzend mit einem dritten Kontaktelement am oberen Rand des Elektrolytbehälters versehen werden, so dass der umgekehrte Fall, nämlich der Kontaktschluss über den Elektrolyten zwischen diesem Kontaktelement und dem zu unterst positionierten Kontaktelement ein weiteres Signal für die ausreichende Auffüllung des Elektrolytraumes mit Referenzelektrolyt erzeugt. Nachteilig bei der in EP 1643242B1 beschriebenen Referenzelektrode ist, dass der Abstand zwischen dem etwas oberhalb des Diaphragmas gelegenen Kontaktelement und dem Diaphragma durch die Konstruktion der Referenzelektrode nach deren Herstellung endgültig festgelegt ist. Die Geschwindigkeit mit dem der Elektrolyt durch das Diaphragma ausfließt, kann jedoch stark variieren, hängt sie doch von der Art des Diaphragmas, von der Höhe des beaufschlagten Druckes innerhalb der Halbzelle, von der Viskosität des Elektrolyten und von dem im Messgut herrschenden Prozessdruck und der Prozesstemperatur ab. Damit können die Vorwarnzeiten, welche verbleiben, um den Elektrolyten aufzufüllen, ebenfalls sehr stark variieren. Die Höhe des Kontaktes auf mechanischem Wege variabel zu gestalten, um verschiedenen Prozesssituationen und Elektrodenausführungen zu entsprechen, wäre bei einer bedruckten Elektrode sehr aufwendig. Rückschlüsse über die Kinetik des Ausflusses des Elektrolyten und damit auch über den ordnungsgemäßen Zustand des Diaphragmas und der Viskosität des Elektrolyten wären nur möglich, wenn die Zeit, welche zwischen den zwei Signalen für vollständige Füllung und Entleerung zum Zeitpunkt der Entleerung bestimmt und ausgewertet würde. In der Zeit zwischen den signalisierten Zuständen, welche sehr groß sein kann, sind keine Informationen über das Diaphragma und den Elektrolyten mit Hilfe der in EP 1643242B1 beschriebenen Vorrichtung erhältlich.

Um Füllstände von Flüssigkeiten in Behältern zu überwachen sind kapazitive Füllstandsmessgeräte, wie beispielsweise in DE 10 2005 053 330 A1 beschrieben, bekannt. Das Prinzip der kapazitiven Füllstandsmessung beruht darauf, dass eine Messsonde, beispielsweise ein Stab, und eine zweite Sonde, welche auch die Wandung des Behälters, in dem sich das Messgut befindet, sein kann, die beiden Elektroden und das Messgut das Dielektrikum eines Kondensators bilden. Da die Kapazität dieses Kondensators vom Füllstand des Messgutes abhängt, lässt sich durch die Messung dieser der Füllstand dynamisch bestimmen. Dazu wird die Sonde in der Regel mit einer Wechselspannung bestimmter Frequenz beaufschlagt und aus dem Antwortsignal in Form eines Stromes die Kapazität des Kondensators und der sich daraus ergebende Füllstand bestimmt. Die Sonde ist in der Praxis vollständig mit einer elektrisch isolierenden Isolationsschicht überzogen, um eine galvanische Trennung des Messgutes von der Elektronik des Messgerätes vorzunehmen, insbesondere da leitfähige Medien als Messgut zu Kurzschlüssen oder mindestens einer Verfälschung der Messwerte führen, und um eine von der Dielektrizitätskonstanten des Messgutes unabhängige Messung zu erreichen, da nur noch die vom Medium bedeckte Isolatorkapazität relevant ist. Wie in DE 10 2005 032 131 A1 beschrieben, kommt es in der Anwendung vor, dass z.B. beim Erhitzen des Messgutes eine Diffusion durch die Sondenisolierung auftreten kann, wobei sich leitende Übergangswiderstände bilden. Ebenfalls können sich derartige ohmsche Widerstände parallel zur Messkapazität durch eine Beschädigung der Sondenisolation ausbilden. Im Fall der Behälterwandung kann durch die Erdung des Behälters eine Verbindung mit der Erde stattfinden. Der Effekt eines zusätzlichen Widerstandes führt zu Verfälschungen des Messwertes bis zum totalen Ausfall des Messgerätes, weshalb die Schrift DE 10 2005 032 131 A1 eine Überwachungsmethode mit elektronischen Mitteln beschreibt, um eine kapazitive Messsonde zu überwachen. Da Einstabmessketten und Referenzhalbzelle bei Reinigungs- und Desinfektionsverfahren grossen thermischen Belastungen ausgesetzt werden, welche der Unversehrtheit der Isolatorschicht einer kapazitiven Füllstandsüberwachung nicht zuträglich sind, ist der Einsatz des kapazitiven Messprinzips für sichere Füllstandsüberwachung des Referenzelektrolyten in einer Referenzhalbzelle bedenklich.

Ein gattungsgemäßer pH-Sensor wird auch in US 2003/0132755 offenbart.

### Darstellung der Erfindung

Die Aufgabe der Erfindung ist es, Anordnungen zu finden, die es ermöglichen, den Füllstand einer potentiometrischen Einstabmesskette dynamisch zu überwachen, so dass die oben aufgeführten Nachteile überwunden werden können. Insbesondere soll der Füllstand der Referenzhalbzelle mit Referenzelektrolyt und der Zustand der Überführung (z.B. eines Diaphragmas) kontinuierlich überwacht werden können, um sowohl die Unversehrtheit der Glasmembran als auch das Potential der Referenzelektrode permanent überprüfen zu können. Dabei sollte auf eine externe Gegenelektrode, die entweder separat ins Messgut eingeführt wird, was dem Prinzip der Einstabmesskette widerspricht, oder die außen an der Einstabmesskette angebracht und kontaktiert werden muss, verzichtet werden.

Gegenstand der Erfindung ist eine potentiometrische pH-Einstabmesskette umfassend eine pH-Glasmembranhalbzelle und eine Referenzhalbzelle mit Diaphragma, die mindestens ein elektrisches Widerstandselement 3, 8 und eine weiteres internes Ableitelement 5 aufweist. Die potentiometrische pH-Einstabmesskette ist bevorzugt gekennzeichnet durch ein zylindrisches, als Elektrodenschaft ausgebildetes Gehäuse aus Glas oder Kunststoff, das mit einem Elektrolyten befüllt ist, in dem eine Bezugselektrode untergebracht ist und das eine Überführung zum Austritt des Elektrolyten besitzt. Die erfindungsgemäße pH-Einstabmesskette weist neben an sich üblicher mit einem Innenpuffer gefüllter pH-Glasmembranhalbzelle und Referenzhalbzelle, die die Glasmembranhalbzelle konzentrisch umschließt, mindestens ein Widerstandselement 3, 8 in Kombination mit mindestens einem weiteren Ableitelement 5 (im folgenden "internes Ableitelement" oder "interne Ableitelektrode" genannt) auf, welche in der Referenzhalbzelle angeordnet sind. Das mindestens eine Widerstandselement erstreckt sich dabei über die Länge des mit Referenzelektrolyten befüllbaren Referenzelektrolytraums über das Diaphragma hinaus und besitzt einen durch die Füllhöhe des Referenzelektrolyten definierten, kontinuierlich veränderlichen wirksamen elektrischen Widerstand. Vorzugsweise unterscheidet sich der Widerstand des Elementes 3, 8 vom Widerstand der Referenzelektrolytlösung, er kann aber auch gleich sein. Widerstandselement und weitere Ableitelektrode(n) sind so gestaltet, dass sowohl Widerstandselement(e) als auch die Ableitelektrode(n) permanent mit dem Referenzelektrolyten in elektrischem Kontakt stehen.

Als Bezugselektrolyt wird bevorzugt eine Kaliumchlorid-Lösung verwendet, die ggf. mit einem hochviskosen Material gel-verfestigt vorliegt. Vorzugsweise ist der Referenzelektrolyt mit einem im Vergleich zum Messgut höheren Innendruck beaufschlagt.

Die Einstabmesskette umfasst bevorzugt die mit einem Innenpuffer gefüllte pH-Glasmembranhalbzelle mit pH-sensitiver Glasmembran 9, einem Temperaturfühler 10 und einem Ableitelement 11, sowie die Referenzhalbzelle mit Diaphragma 12, die die Glasmembranhalbzelle 9 konzentrisch umschließt und Referenzelektrolyten 14, Referenzelektrode 13, Widerstandelement(e) 3, 8 und interne Ableitelektrode(n) 5 aufweist. Das mindestens eine Widerstandselement 8 ist z.B. entweder durchgängig aufgebaut oder besteht aus in Reihe geschalteten einzelnen Widerstandselementen 3, zwischen denen diskrete und inerte Kontaktstellen 4 zum Referenzelektrolyten liegen.

In einer vorteilhaften Ausführung der Erfindung ist das Widerstandselement so gewählt, dass es einen deutlich größeren Widerstand, als die Referenzelektrolytlösung aufweist. D.h. das Widerstandselement ist hochohmig und besitzt einen grösseren Widerstand im Vergleich zum Elektrolyten, vorzugsweise wenigstens um ein bis zwei Dekaden.

Das Widerstandselement kann zum Beispiel als Kohleschichtwiderstand, Metallschichtwiderstand, Metalloxidwiderstand, Metallfilmwiderstand oder ein Widerstandsdraht auf der Basis von Konstantan, Manganin, Nickelin oder einer anderen Metallegierung oder eine mit Siebdruck aufgebrachte, zum Beispiel auf Kohlenstoff basierende Widerstandspaste sein, die durchgängig als ein Widerstand oder wie in Reihe geschaltete Einzelwiderstände gestaltet ist und sich über die ganze Länge des Referenzelektrolytraumes erstreckt. Eine andere mögliche Ausführungsform besteht in der Aneinanderreihung von kommerziell erhältlichen Draht-Widerständen, mit entsprechenden gegenüber dem Referenzelektrolyten inerten Kontaktstellen zwischen den einzelnen Widerständen, die in elektrischen Kontakt mit dem Elektrolyten treten. Es sind aber auch verschiedene andere Ausführungsformen und Technologien zur Erzeugung einer Widerstands- Struktur denkbar. Der spezifische Widerstand des Widerstandselementes bzw. der einzelnen Widerstände ist bei einer weiteren vorteilhaften Ausführung so gewählt, dass er kleiner ist als der spezifische Widerstand des Referenzelektrolyten, vorzugsweise um wenigstens ein bis zwei Dekaden.

Die interne Ableitelektrode kann z. B. ein korrosionsfester Draht aus entsprechendem Material wie z.B. aus Platin, Edelstahl oder eine auf der Basis von Siebdruck mit entsprechenden Pasten gestaltete Struktur sein.

Erfindungsgemäß sind das oder die Widerstandselemente und die entsprechenden Ableitelektroden auf die Oberfläche der Glasmembranhalbzelle oder auf ein diese umgebendes zylinderförmiges Substrat, vorzugsweise ein Kunststoffsubstrat appliziert. Eine weitere Möglichkeit, eine derartige Widerstandsstruktur in die Einstabmesskette einzubringen, ist, die Widerstandselemente und Ableitelektroden auf einem röhrenförmigen Substrat, welches die Glasmembranhalbzelle im Elektrolytraum der Referenzhalbzelle umgibt, unterzubringen. Eine einfache Ausführung der alternativen Ausführungsformen, besteht aus zwei gleich langen, sich über die ganze Länge des Referenzelektrolytraumes erstreckenden Metalldrähten z. B. aus Platin, Edelstahl oder mit Silberchlorid überzogenem Silber. Die oben ausgeführten Formen auf der Basis von Siebdruck können ebenfalls auf diese Ausführungsform übertragen werden. Möglich sind auch entsprechende Metallisierungen der Innenwände der Referenzhalbzelle oder metallisierte Substrate in unterschiedlicher Formen und Materialien. Das beschriebene Prinzip der Überwachung des Füllstandes und der Überführung kann auch auf eine eigenständige reine potentiometrische Halbzelle mit Referenzelektrolyten, Referenzelektrode und Überführung übertragen werden, welche auch mit anderen Sensoren kombiniert werden kann.

Entsprechende Pasten sind dem Fachmann bekannt, so dass die Ableitelektroden und/oder die Widerstandselemente vorzugsweise mit Siebdruck mit entsprechenden Widerstands-, Kontakt- und Isolationssiebdruckpasten, Metallglasloten oder metallhaltigen Leitlacken hergestellt werden können.

In einer bevorzugten Ausführungsvariante kann die interne Ableitelektrode 5 eine polarisationsstabile Silber/Silberchlorid-Elektrode sein. Die interne Ableitelektrode 5 kann weiterhin so gestaltet sein, dass sie nur am unteren Ende des Referenzelektrolytraumes Kontakt mit dem Elektrolyten 14 hat. Dies ist besonders günstig in einer Ausführungsform mit Widerstandselementen mit hohem Widerstand. Da die interne Ableitelektrode im Gegensatz zum kapazitiven Messprinzip direkten elektrischen Kontakt mit dem Messgut hat, kann sie zusätzlich als interne Erdung und/oder als zweite Referenzelektrode eingesetzt werden.

In dem Maße, in dem der Elektrolyt durch das Diaphragma ausfließt und sich der Füllstand verringert, erhöht sich der Widerstand, welcher zwischen dem Abgriff des Widerstandselementes und der internen Ableitelektrode gemessen wird, da die Füllhöhe des Elektrolyten den wirksamen Widerstand des Widerstandselement definiert.

Die Erfindung beruht auf der Erkenntnis, dass bei ausreichend großem Widerstand des jeweils vom Referenzelektrolyten nicht benetzten Abschnittes des Widerstandselementes der Widerstand des mit Elektrolyt benetzten Teils des Widerstandselementes auf Grund der wesentlich größeren Leitfähigkeit des Referenzelektrolyten vernachlässigbar ist, desgleichen die Einflüsse von Temperatur und Leitfähigkeit des Referenzelektrolyten. Diesen Vorteil macht sich die Erfindung zunutze, denn auf diese Weise lässt sich durch die Beobachtung des gemessenen Widerstandes die Füllhöhe des Elektrolyten kontinuierlich, während des gesamten Einsatzes der Einstabmesskette beobachten, aufzeichnen und überwachen. Bei entsprechender Auslegung kann der Elektrolytfüllstand automatisch nachgeregelt werden und so immer unabhängig von den oben genannten Randbedingungen des Prozesses und der Art der Überführung oder des Referenzelektrolyten der eingesetzten Einstabmesskette auf einem sicheren Niveau gehalten werden.

Eine alternative Ausführung der Erfindung besteht in der Verwendung eines Widerstandselementes 8 in einer wie oben beschriebenen erfindungsgemäßen Anordnung, wobei das Widerstandselement 8 wenigstens zwei Leiterstrukturen aufweist, von denen sich wenigstens eine über den ganzen Elektrolytraum der Referenzhalbzelle über das Diaphragma hinaus vertikal erstreckt und deren Widerstand sich nicht wesentlich von dem des Referenzelektrolyten 14 unterscheidet, sondern vorzugsweise sogar kleiner als der des Referenzelektrolyten ist. Mit Hilfe dieses Elementes kann der Füllstand ebenfalls dynamisch verfolgt werden, indem das Widerstandselement gleichsam einer Leitfähigkeitsmesskette fungiert und der Referenzelektrolyt das Dielektrikum bildet. Bei dieser alternativen Ausführung der Erfindung, der Ausbildung des Widerstandselementes in einer zu einer Leitfähigkeitsmesszelle ähnlichen Form, wird der Widerstand des Referenzelektrolyten über den gesamten Raum der Referenzhalbzelle gemessen und ausgewertet. In dem Maße in dem der Referenzelektrolyt aus der Halbzelle ausfließt, steigt der Widerstand zwischen den Leiterstrukturen an, da der leitfähige Referenzelektrolyt in der Regel durch das weniger leitende Dielektrikum Luft ersetzt wird.

Durch die kontinuierliche Erfassung und Auswertung dieser Widerstandsänderung kann eine Überwachung des Füllstandes der Halbzelle mit Referenzelektrolyt erfolgen, womit auch eine Überwachung der Überführung 12, wie oben beschrieben, ermöglicht wird.

Die Konstruktion des Widerstandselementes erfolgt dabei so, dass gewährleistet werden kann, dass die Änderung des Widerstandes je nach Elektrolyt-Niveau auf der ganzen Länge eintritt. So ermöglicht eine erfindungsgemäße Ausgestaltung der Anordnung des Widerstandselementes über das angewendete Diaphragma hinaus bzw. unterhalb des Diaphragmas, dass immer ein definierter Widerstandswert ermittelt werden kann, da eine weiteres Auslaufen des Elektrolyten nicht mehr möglich ist.

Im Gegensatz zur kapazitiven Füllstandsmessung wird keine Kapazität sondern ein ohmscher Widerstand bestimmt, weshalb der elektrische Kontakt der Widerstandelemente 3, 8 und internen Ableitelektroden 5 zum leitfähigen Elektrolyten 14 nicht schädlich, sondern notwendig ist. Da bei der beschriebenen alternativen Ausführung der Erfindung eine Herabsetzung der Leitfähigkeit des Referenzelektrolyten durch Verarmung an Elektrolyt (z.B. Kaliumchlorid) ebenfalls deutlich zur Erhöhung des gemessenen Widerstandes beitragen kann, eignet sich diese Ausführung besonders bei Referenzhalbzellen mit einer hohen Austrittsgeschwindigkeit des Referenzelektrolyten durch die Überführung. Die Temperatur, die ebenfalls Einfluss auf die Leitfähigkeit des Elektrolyten besitzt, kann bei Ausführungsform mit einem Temperatursensor in Auswertung mit einbezogen werden.

Ein großer Vorteil der erfindungsgemäßen Anordnung besteht darin, dass die Widerstandswerte sich immer in einem bestimmten Bereich bewegen, so lange die Einstabmesskette funktionstüchtig ist. Bei vollständiger Füllung der Halbzelle mit Referenzelektrolyt bestimmt dessen Leitfähigkeit den gemessenen Widerstand, während eine fast vollständige Entleerung der Halbzelle den Widerstand auf einen maximalen Wert ansteigen lässt, der hauptsächlich durch das (dann unbenetzt vorliegende) Widerstandselement definiert ist. Anders als in EP 1 643 242 B1 signalisiert jedoch ein undefiniert hoher Widerstand nicht die Notwendigkeit zum Nachfüllen, sondern den Funktionsausfall der Messkette, der entweder durch vollständige Entleerung oder Austrocknung des Referenzelektrolyten in der Referenzhalbzelle oder einen anderen Fehler z.B. einen Unterbruch in der Kontaktierung auftreten kann.

Bei der erfindungsgemäßen Variante der Gestaltung der Widerstandsverhältnisse in Kombination mit diskreten Kontaktstellen 4 zwischen Widerstandselement 3 und Elektrolyt 14 kann der Unterschied zwischen dem bekannten Widerstand des trockenen Widerstandselementes und dem tatsächlich gemessenen Wert zusätzlich zur Beurteilung der Leitfähigkeit des Referenzelektrolyten herangezogen werden. Die erfindungsgemäße Einstabmesskette verbindet diese Vorteile mit der Möglichkeit, aus der Kinetik des Auslaufens, bei entsprechender Aufzeichnung und mathematischen Analyse z.B. durch eine Software in einem angeschlossenen Mikroprozessor, Rückschlüsse auf Veränderungen am Diaphragma ohne den Einsatz einer zusätzlichen externen Hilfselektrode zu ziehen. Des Weiteren kann die interne Ableitelektrode durch entsprechende Verschaltung in der Messelektronik als Solution Ground benutzt werden.

Die erfindungsgemäße Einstabmesskette ist z.B. vorteilhaft in einem Verfahren zur kontinuierlichen Füllstandsmessung und/oder zur Überwachung des Zustandes des Überführungselementes geeignet. Der Widerstand des erfindungsgemäßen Widerstandselementes wird dazu wesentlich größer, vorzugsweise mindestens um eine Dekade als der des Elektrolyten gewählt. Kontinuierlich oder in zeitlichen Abständen wird der elektrische Widerstand des vom Referenzelektrolyten unbenetzten Teiles des Widerstandselementes gemessen und mit dem bestimmten elektrischen Widerstand des Ausgangselementes verglichen.

Alternativ erfolgt das Verfahren zur kontinuierlichen Füllstandsmessung und/oder zur Überwachung des Zustandes des Überführungselementes bei Verwendung eines erfindungsgemäßen Widerstandselementes, dessen Widerstand sich von dem des Elektrolyten kaum unterscheidet oder gleich bzw. kleiner ist als dieser, wobei man kontinuierlich oder in zeitlichen Abständen den Widerstand des Referenzelektrolyten misst und mit dem Ausgangswiderstand des Elektrolyten vergleicht.

Wesentlich ist, dass sich der Widerstand des Elementes 3, 8 kontinuierlich mit dem Elektrolyt-Niveau ändert.

Gegenstand der Erfindung ist auch ein Messsystem, welches eine erfindungsgemäße potentiometrische pH-Einstabmesskette in Kombination mit elektronischen Elementen aufweist.

Diese Elemente sind ausgewählt aus Elementen, die in Abhängigkeit der Zielsetzung und des Aufbaus der Einstabmesskette, geeignet sind, den ohmschen Widerstand des vom Referenzelektrolyten unbenetzten Teiles des einen oder der mehreren Widerstandselemente kontinuierlich oder in bestimmten Zeitabständen, sowie die Temperatur zu messen, zu digitalisieren, aufzuzeichnen und auszuwerten. Sie können kombiniert sein mit Elementen, die den Widerstand zwischen der internen Ableitelektrode und der Ableitung der Glasmembranhalbzelle parallel zu den anderen Funktionen der internen Ableitelektrode zur Bestimmung des Glaswiderstandes erfassen und auswerten. Sie können weiterhin kombiniert werden mit Elementen, die ggf. die Potentialdifferenz zwischen der Referenzelektrode der Referenzhalbzelle und der internen Ableitelektrode, wenn letztere als polarisationsstabile zweite Referenzelektrode ausgebildet ist, parallel zu den anderen Funktionen der internen Ableitelektrode zur Prüfung der Referenzelektrode erfassen und auswerten und/oder mit Elementen, die ggf. die Potentialdifferenz zwischen der Referenzelektrode der Referenzhalbzelle und der Ableitung der Glasmembranhalbzelle zur Bestimmung des pH-Wertes messen, digitalisieren, aufzeichnen und weiterleiten.

Es ist günstig, diese elektronischen Elemente im Kopf der Einstabmesskette unterzubringen. Vorzugsweise handelt es sich um Operationsverstärker, AD-Wandler, Mikroprozessoren, Speicherbausteine sowie Anordnungen zur galvanischen Trennung der Messelektronik bzw. um entsprechende Schnittstellen zur digitalen und analogen Signalübertragung und zu Einrichtungen zum Energietransfer, mit deren Hilfe der Widerstand des vom Referenzelektrolyten unbenetzten Teiles des Widerstandselementes kontinuierlich gemessen, digitalisiert und aufgezeichnet werden kann.

Die selbe Elektronik kann z. B. durch "multiplexing" der Signaleingänge so konstruiert sein, dass auch die Widerstände zwischen der internen Ableitelektrode und der Ableitung der Glasmembranhalbzelle zur Bestimmung des Glaswiderstandes, sowie den Widerstand des z. B. als PT100, PT1000 oder NTC ausgeführten Temperaturfühlers, als auch die Potentialdifferenz zwischen der Referenzelektrode der Referenzhalbzelle und der internen Ableitelektrode, wenn letztere als polarisationsstabile, d.h. mit einer hohen Austauschstromdichte ausgestatte zweite Referenzelektrode, z. B. auch als Silber/Silberchlorid - Elektrode ausgebildet ist, zur Prüfung der Referenzelektrode sowie die Potentialdifferenz zwischen der Referenzelektrode der Referenzhalbzelle und der Ableitung der Glasmembranhalbzelle zur Bestimmung des pH -Wertes erfasst werden können.

Alternativ ist es jedoch auch möglich, die notwendige Elektronik außerhalb der Einstabmesskette zu etablieren.

Vorteilhafte Ausführungen werden in den Unteransprüchen beschrieben.

Anhand von Ausführungsbeispielen wird die Erfindung näher erläutert.

### Beschreibung der Zeichnungen

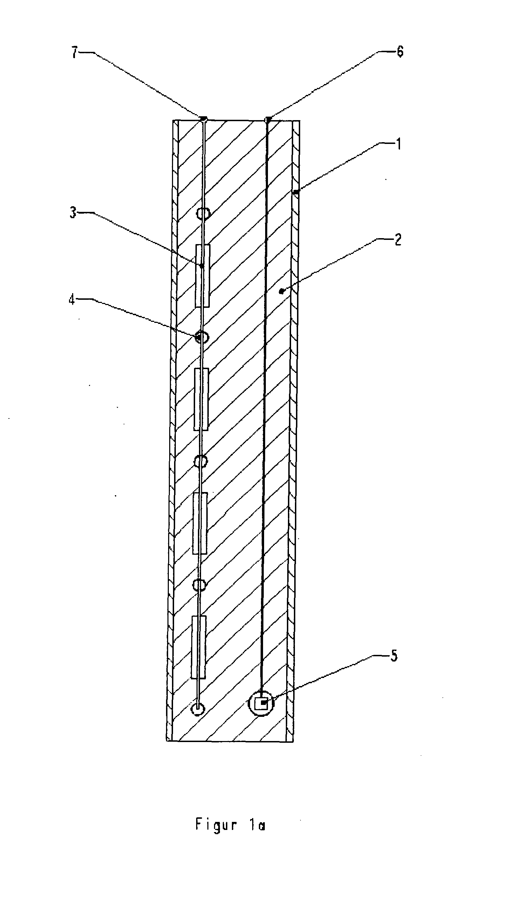

- Figur 1a - c:: schematische Darstellung Widerstands- und interner Ableitelektrodenstrukturen.
- 1a:: Widerstandselement mit Einzelwiderständen und interner Ableitelektrode auf Kunststoffsubstrat
- 1b:: Widerstandselement mit durchgehendem Widerstand und interner Ableitelektrode auf Kunststoffsubstrat
- 1c:: Widerstandselement mit mehreren durchgehenden Widerstandselementen und internen Ableitelektroden auf Aussenseite der Glasmembranhalbzelle
- Figur 2:: schematischen Aufbau einer pH - Einstabmesskette mit dynamischer Füllstandsüberüberwachung.
- Figur 3:: Verlauf des Widerstandes mit der Füllhöhe des Referenzelektrolyten

### Bezugszeichenliste

- 1: Kunststoffsubstrat
- 2: Isolation
- 3: Einzelwiderstand
- 4: Kontaktstelle zu Referenzelektrolyt
- 5: interne Ableitelektroden
- 6: Abgriff der internen Ableitelektrode
- 7: Abgriff des Widerstandselementes
- 8: Widerstandselemente
- 9: Glasmembran der Glasmembranhalbzelle
- 10: Thermoelement
- 11: Ableitelektrode der Glasmembranhalbzelle
- 12: Diaphragma
- 13: Referenzelektrode
- 14: Referenzelektrolyt
- 15: Abgriff des Thermoelementes
- 16: Abgriff der Ableitelektrode der Glasmembranhalbzelle
- 17: Abgriff der Referenzelektrode

### Herstellung der Elemente

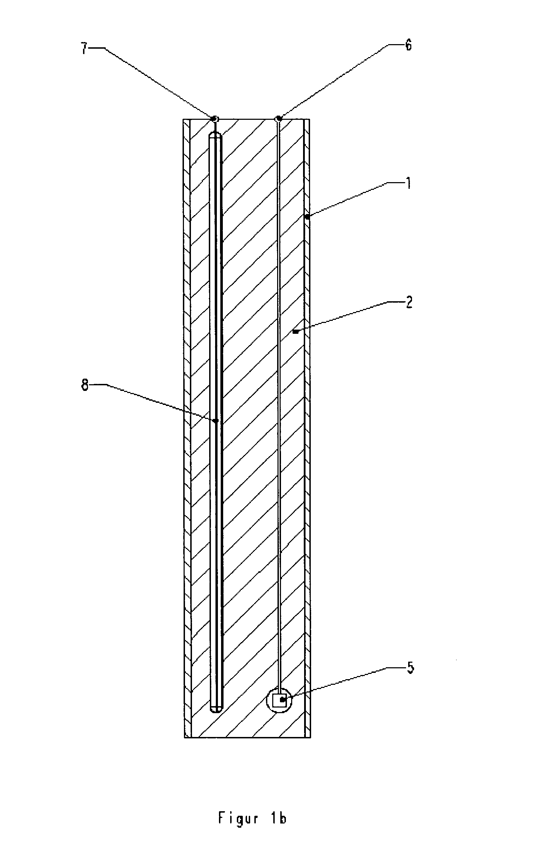

Auf ein streifenförmiges Kunststoffsubstrat werden mit Hilfe von Siebdruckverfahren und entsprechenden Widerstands-, Metall- und Isolatorpasten Strukturen, wie sie schematisch in Figur 1a und 1b dargestellt sind, aufgebracht.

Figur 1a zeigt ein Widerstandselement, bei welchem Einzelwiderstandselemente 3 in Reihe auf ein Kunststoffsubstrat 1 aufgedruckt und mit einer Isolatorschicht versehen sind. Zwischen den einzelnen Widerständen ist die Isolation unterbrochen, so dass an diesen diskreten Stellen 4 Kontakt zum Referenzelektrolyten 14 hergestellt werden kann. Die interne Ableitelektrode 5 ist ebenfalls auf das Substrat 1 aufgedruckt und bis auf einen dem Diaphragma 12 am nächsten liegenden Teil isoliert. Immer wenn ein Kontaktpunkt zwischen den einzelnen Widerstandselementen nicht mehr vom absinkenden Elektrolyten kontaktiert wird, gibt es eine deutliche Widerstandserhöhung zwischen den Abgriffen der Widerstandsstruktur.

Figur 1b zeigt ein Widerstandselement mit durchgehendem Widerstand 8 und interner Ableitelektrode 5 auf einem Kunststoffsubstrat. Da über die gesamte Füllhöhe des Elektrolyten 14 Kontakt mit dem Widerstand besteht, erfolgt die Widerstandserhöhung kontinuierlich mit abnehmendem Füllstand des Elektrolyten. Ein derartig gestaltetes Widerstandselement wird in den Referenzelektrolytraum so eingebracht, dass es sich über die gesamte Länge der Referenzhalbzelle erstreckt und die interne Ableitung 5 in Höhe des Diaphragmas Kontakt zum Referenzelektrolyten 14 hat. Die Kontaktierung der internen Ableitung und des Widerstandselementes erfolgt so wie die der anderen Ableitungen der Einstabmesskette isoliert von allen Elektrolyten. Der dem Füllstand der Referenzhalbzelle mit Referenzelektrolyten entsprechende Widerstand zwischen den beiden Abgriffen des Elementes wird mit entsprechenden elektronischen Vorrichtungen gemessen und ausgewertet.

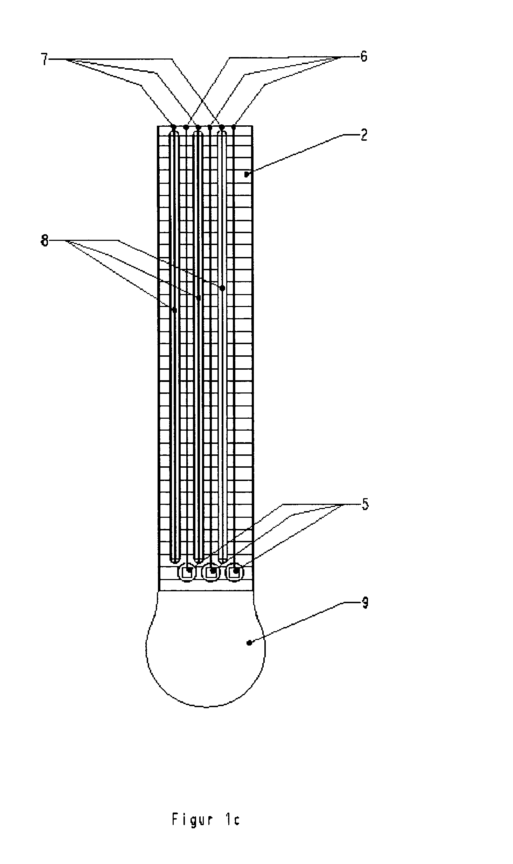

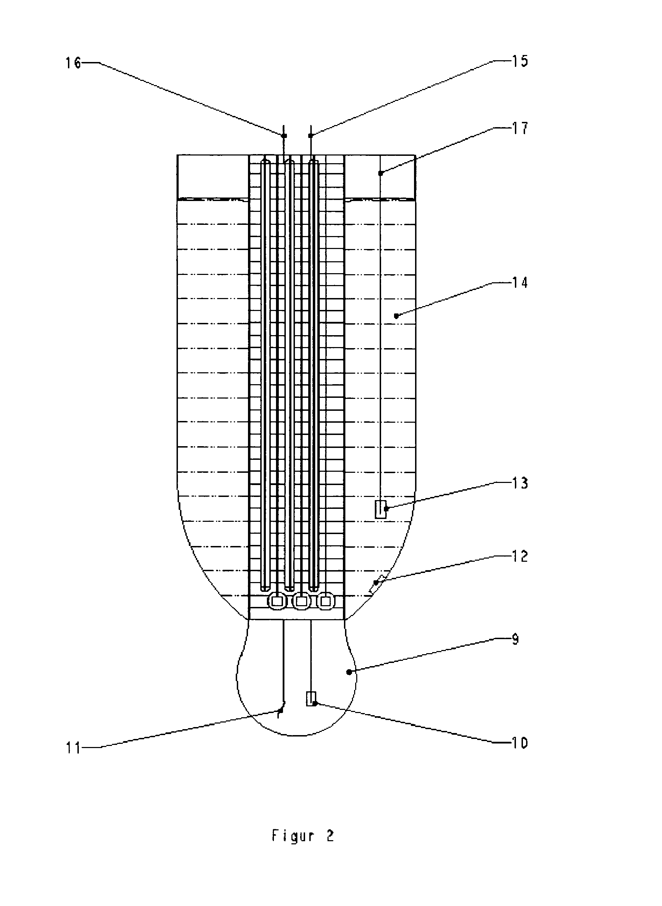

Figur 1c und 2 zeigen eine alternative Ausführung, wonach das Widerstandselement 3, 8 sowie die interne Ableitelektrode 5 direkt auf der äusseren Oberfläche der Glasmembranhalbzelle, auf dem Teil, welcher sich in der Elektrolytkammer der Referenzhalbzelle befindet, mit Hilfe von Siebdruckverfahren und entsprechenden Widerstands-, Metall- und Isolatorpasten gestaltet sind. Damit entfällt das Kunststoffsubstrat. Ggf. werden mehrere Widerstandselemente und interne Ableitelektroden vertikal auf der äußeren zylindrischen Oberfläche der Glasmembranhalbzelle untergebracht, wie in Figur 1c und 2 schematisch dargestellt. Werden z.B. die benachbarten internen Ableitelektroden und Widerstandselemente dann paarweise mit Hilfe eines Multiplexers vermessen, lässt sich der Füllstand auch bei geneigter Einstabmesskette beurteilen und bei entsprechender Zuordnung sind auch der Neigungswinkel und die Lage der Überführung, z.B. ein Diaphragma, diagnostizierbar. Es lässt sich aber auch ein summarischer Wert für alle Widerstandselemente ermitteln und auswerten.

### Beispiel 1

Es wurde ein Widerstandselement mit einer Länge von 50 mm analog zu Figur 1a mit 5 Einzelwiderständen a 20 KOhm und 6 diskreten Kontaktstellen zum Elektrolyten aufgebaut und in eine Referenzhalbzelle mit einer 3 M KCI - Lösung als Referenzelektrolyt eingebracht. Der jeweilige Widerstand wurde bei 6 verschiedenen Füllhöhen, bei denen die jeweilige Anzahl der Kontaktstellen mit dem Elektrolyten bedeckt waren, mit dem Messsystem Typ 71 der Firma Knick im dem Modus, welcher für Widerstandsmessungen des Diaphragmas vorgesehen ist (Messbereich 0 - 200 KOhm) bestimmt. Der Widerstand für das nicht eingetauchte Widerstandselement wurde in diesem Modus mit 112 KOhm bestimmt.

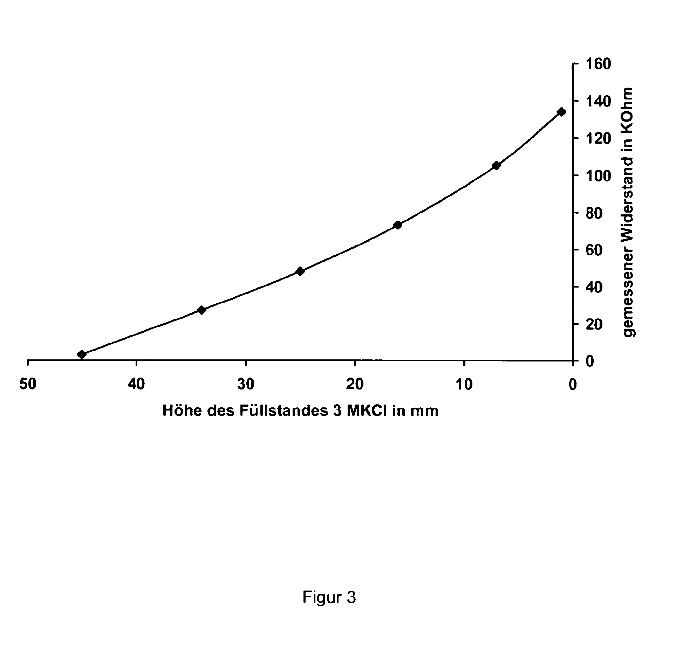

Figur 3 zeigt den Anstieg des Widerstandes mit sinkendem Füllstand.

## Patentansprüche

1. Potentiometrische pH-Einstabmesskette umfassend eine pH-Glasmembranhalbzelle und eine Referenzhalbzelle mit Diaphragma (12), die mindestens ein elektrisches Widerstandselement (3, 8) und ein weiteres internes Ableitelement (5) aufweist, die so gestaltet sind, dass sowohl Widerstandselement(e) (3, 8) als auch die interne(n) Ableitelement(e) (5) permanent mit dem Referenzelektrolyten (14) in elektrischem Kontakt stehen, **dadurch gekennzeichnet, dass** das mindestens eine Widerstandselement (3, 8) sich über die Länge des mit Referenzelektrolyten befüllten Referenzelektrolytraum über das Diaphragma (12) hinaus erstreckt und einen durch die Füllhöhe des Referenzelektrolyten (14) definierten, kontinuierlich veränderlichen wirksamen elektrischen Widerstand besitzt.

2. Potentiometrische pH-Einstabmesskette nach Anspruch 1 umfassend eine mit einem Innenpuffer gefüllte pH-Glasmembranhalbzelle mit pH-sensitiver Glasmembran (9), einem Temperaturfühler (10) und einem Ableitelement (11), sowie eine Referenzhalbzelle mit Diaphragma (12), die die Glasmembranhalbzelle konzentrisch umschließt, eine Referenzelektrode (13) und einen Referenzelektrolyten (14) enthält sowie mindestens das Widerstandselement (3, 8) und die weitere interne Ableitelektrode (5), wobei der Widerstand des Elementes (3, 8) sich vom Widerstand der Referenzelektrolytlösung (14) unterscheidet oder gleich ist.

3. Einstabmesskette nach Anspruch 1 oder 2, ***dadurch gekennzeichnet, dass*** das Widerstandselement (8) durchgängig aufgebaut ist oder dass das Widerstandselement aus in Reihe geschalteten einzelnen Widerstandselementen (3) besteht, zwischen denen diskrete Kontaktstellen (4) zum Referenzelektrolyten liegen.

4. Einstabmesskette nach einem der Ansprüche 1 bis 3, ***dadurch gekennzeichnet, dass*** das Widerstandselement (3, 8) hochohmig ist und einen grösseren Widerstand im Vergleich zum Elektrolyten besitzt.

5. Einstabmesskette nach einem der Ansprüche 1 bis 3, ***dadurch gekennzeichnet, dass*** das Widerstandselement (8) wenigstens zwei Leiterstrukturen aufweist, von denen sich wenigstens eine über die gesamte Länge des mit Referenzelektrolyten befüllbaren Referenzelektrolytraum erstreckt, wobei der Widerstand des Widerstandselementes sich unwesentlich oder gar nicht von dem Widerstand des Elektrolyten unterscheidet oder kleiner ist.

6. Einstabmesskette nach einem der Ansprüche 1 bis 5, ***dadurch gekennzeichnet, dass*** die weitere, interne Ableitelektrode (5) als polarisationsstabile zweite Referenzelektrode ausgebildet ist, welche einerseits als Gegenelektrode zur Messung des Widerstands des Widerstandselementes, andererseits als interne Masse und auch, wenn sie als polarisationsstabile Elektrode zweiter Art ausgeführt ist, zur Überwachung der ersten Referenzelektrode fungiert.

7. Einstabmesskette nach einem der Ansprüche 1 bis 6, ***dadurch gekennzeichnet, dass*** die interne Ableitelektrode (5) nur am unteren Ende in Kontakt mit dem Elektrolyten (14) steht.

8. Einstabmesskette nach einem der Ansprüche 1 bis 7, ***dadurch gekennzeichnet, dass*** das oder die Widerstandselemente und die entsprechenden Ableitelektroden sich auf der Oberfläche der Glasmembranhalbzelle oder sich auf einem diese umgebenden zylinderförmigen Substrat (1) befinden.

9. Einstabmesskette nach einem der Ansprüche 1 bis 8, ***dadurch gekennzeichnet, dass*** der Referenzelektrolyt mit einem im Vergleich zum Messgut höheren Innendruck beaufschlagt ist.

10. Messsystem umfassend eine potentiometrische pH - Einstabmesskette nach einem der Ansprüche 1 bis 9 sowie elektronische Elemente, die
a) den ohmschen Widerstand des vom Referenzelektrolyten unbenetzten Teiles des einen oder der mehreren Widerstandselemente kontinuierlich oder in bestimmten Zeitabständen, sowie die Temperatur messen, digitalisieren, aufzeichnen und auswerten und
b) ggf. den Widerstand zwischen der internen Ableitelektrode und der Ableitung der Glasmembranhalbzelle parallel zu den anderen Funktionen der internen Ableitelektrode zur Bestimmung des Glaswiderstandes erfassen und auswerten und/oder
c) ggf. die Potentialdifferenz zwischen der Referenzelektrode der Referenzhalbzelle und der internen Ableitelektrode, wenn letztere als polarisationsstabile zweite Referenzelektrode ausgebildet ist, parallel zu den anderen Funktionen der internen Ableitelektrode zur Prüfung der Referenzelektrode erfassen und auswerten und/oder
d) ggf. die Potentialdifferenz zwischen der Referenzelektrode der Referenzhalbzelle und der Ableitung der Glasmembranhalbzelle zur Bestimmung des pH - Wertes messen, digitalisieren, aufzeichnen und weiterleiten.

11. Messsystem nach Anspruch 10, ***dadurch gekennzeichnet, dass*** die elektronischen Elemente einzeln oder in Kombination ausgewählt sind aus Operationsverstärker, AD - Wandler, Mikroprozessoren, Speicherbausteine sowie Anordnungen zur galvanischen Trennung der Messelektronik zu Schnittstellen zur digitalen und/oder analogen Signal- und Energieübertragung.

12. Messsystem nach Anspruch 10 oder 11, ***dadurch gekennzeichnet, dass*** es die elektronischen Elemente in einem Kopf auf der Einstabmesskette aufweist.

13. Verwendung mindestens eines Widerstandselementes mit einem bestimmten elektrischen Widerstand in Kombination mit mindestens einer weiteren internen Ableitelektrode in einer Referenzhalbzelle in einer Anordnung gemäß einem der Ansprüche 1 bis 12, wobei das Widerstandelement sich über die gesamte Länge des mit Referenzelektrolyten befüllbaren Referenzelektrolytraum erstreckt, und wobei Widerstandelement und Ableitelement permanent mit dem Referenzelektrolyten in elektrischem Kontakt stehen.

14. Verwendung nach Anspruch 13, zur kontinuierlichen oder in zeitlichen Abständen vorgenommen Messung des elektrischen Widerstandes des vom Referenzelektrolyten unbenetzten Teiles des Widerstandselementes und zum Vergleich mit dem bestimmten elektrischen Widerstand des Ausgangselementes.

15. Verwendung nach Anspruch 13, zur kontinuierlichen oder in zeitlichen Abständen vorgenommenen Messung des Widerstandes des Referenzelektrolyten und zum Vergleich mit dem Ausgangswiderstand des Elektrolyten.

## Claims

1. A potentiometric pH single rod measurement chain comprising a pH glass membrane half-cell and a reference half-cell with a diaphragm (12) which has at least one electrical resistive element (3, 8) and a further internal lead element (5) which are designed such that both resistive element(s) (3, 8) and the internal lead element(s) (5) are permanently in electrical contact with the reference electrolyte (14), **characterized in that** the at least one resistive element (3, 8) extends over the length of the reference electrolyte chamber filled with reference electrolyte beyond the diaphragm (12) and has a continuously varying, effective electrical resistance defined by the filling level of the reference electrolyte (14).

2. A potentiometric pH single rod measurement chain according to claim 1 comprising a pH glass membrane half-cell filled with an internal buffer, having a pH-sensitive glass membrane (9), a temperature probe (10) and a lead element (11), as well as at least one reference half-cell with a diaphragm (12) which concentrically encloses the glass membrane half-cell, includes a reference electrode (13) and a reference electrolyte (14), as well as at least the resistive element (3, 8) and the further internal lead electrode (5), wherein the resistance of the element (3, 8) differs from or is equal to the resistance of the reference electrolyte solution (14).

3. A single rod measurement chain according to claim 1 or 2, **characterized in that** the resistive element (8) has a continuous structure or that the resistive element is composed of individual series-connected resistive elements (3) between which there are discrete contact points (4) with the reference electrolyte.

4. A single rod measurement chain according to any one of claims 1 to 3, **characterized in that** the resistive element (3, 8) is high-resistive and has a greater resistance as compared to the electrolyte.

5. A single rod measurement chain according to any one of claims 1 to 3, **characterized in that** the resistive element (8) has at least two conductive patterns, at least one of which extends over the full length of the reference electrolyte chamber that can be filled with the reference electrolyte, wherein the resistance of the resistive element differs insignificantly or not all from or is lower than the resistance of the electrolyte.

6. A single rod measurement chain according to any one of claims 1 to 5, **characterized in that** the further internal lead electrode (5) is formed as a polarisation-stable second reference electrode which, on the one hand, acts as a counter-electrode for measuring the resistance of the resistive element and, on the other hand, as internal ground and also for monitoring the first reference electrode when designed as polarisation-stable second-type electrode.

7. A single rod measurement chain according to any one of claims 1 to 6, **characterized in that** the internal lead electrode (5) is in contact with the electrolyte (14) only at its lower end.

8. A single rod measurement chain according to any one of claims 1 to 7, **characterized in that** the resistive element or elements and the appropriate lead electrodes are located on the surface of the glass membrane half-cell or on a cylindrical substrate (1) surrounding it.

9. A single rod measurement chain according to any one of claims 1 to 8, **characterized in that** higher internal pressure is applied to the reference electrolyte as compared to the item being measured.

10. A measuring system comprising a potentiometric pH single rod measurement chain according to any one of claims 1 to 9 as well as electronic elements which
a) measure, digitalize, record and evaluate continuously or in certain time intervals the ohmic resistance of such portion of the one or several resistive elements that is not wetted by the reference electrolyte, as well as the temperature; and
b) capture and evaluate the resistance between the internal lead electrode and the lead of the glass membrane half-cell parallel to the other functions of the internal lead electrode for determining the glass resistance, if applicable; and/or
c) capture and evaluate the potential difference between the reference electrode of the reference half-cell and the internal lead electrode, when the latter is formed as a polarisation-stable second reference electrode, parallel to the other functions of the internal lead electrode for checking the reference electrode, if applicable; and/or
d) measure, digitalize, record and forward the potential difference between the reference electrode of the reference half-cell and the lead of the glass membrane half-cell for determining the pH value, if applicable.

11. A measuring system according to claim 10, **characterized in that** the electronic elements are selected individually or in combination from operation amplifier, AD converter, microprocessors, memory chips and arrangements for galvanic separation of the electronic measuring systems from interfaces for digital and/or analogue signal and energy transmission.

12. A measuring system according to claim 10 or 11, **characterized in that** it has the electronic elements in a head on the single rod measurement chain.

13. Use of at least one resistive element having a specific electrical resistance in combination with at least one further internal lead electrode in a reference half-cell in an arrangement in accordance with any one of claims 1 to 12, wherein the resistive element extends over the full length of the reference electrolyte chamber that can be filled with the reference electrolyte, and wherein resistive element and lead element are permanently in electrical contact with the reference electrolyte.

14. Use according to claim 13 for continuous measurement or measurement in time intervals of the electrical resistance of such portion of the resistive element that is not wetted by the reference electrolyte and for comparison with the specific electrical resistance of the output element.

15. Use according to claim 13 for continuous measurement or measurement in time intervals of the resistance of the reference electrolyte and for comparison with the output resistance of the electrolyte.

## Revendications

1. Chaîne de mesure du pH potentiométrique à une tige comportant une demi-cellule pH à membrane de verre et une demi-cellule de référence avec un diaphragme (12) qui présente au moins un élément résistif électrique (3, 8) et un autre élément de dérivation interne (5) qui sont conçus de manière à ce que non seulement les élément(s) résistif(s) (3, 8) mais aussi les élément(s) de dérivation interne(s) (5) soient en permanence en contact électrique avec l'électrolyte de référence (14), **caractérisé en ce que** l'au moins un élément résistif (3, 8) s'étend sur la longueur de la chambre d'électrolyte de référence remplie d'électrolyte de référence, au-delà du diaphragme (12) et présente une résistance électrique effective, variable en continu et définie par le niveau de remplissage de l'électrolyte de référence (14).

2. Chaîne de mesure du pH potentiométrique à une tige selon la revendication 1 comportant une demi-cellule pH à membrane de verre remplie d'un tampon interne, ayant une membrane de verre sensible au pH (9), un palpeur de température (10) et un élément de dérivation (11), ainsi qu'une demi-cellule de référence avec un diaphragme (12) qui enferme concentriquement la demi-cellule à membrane de verre, comprend une électrode de référence (13) et un électrolyte de référence (14) ainsi qu'au moins l'élément résistif (3, 8) et l'autre électrode de dérivation interne (5), dans lequel la résistance de l'élément (3, 8) diffère de la résistance de la solution d'électrolyte de référence (14) ou est égale à celle-ci.

3. Chaîne de mesure à une tige selon la revendication 1 ou 2, **caractérisé en ce que** l'élément résistif (8) est agencé en continu ou que l'élément résistif est composé d'éléments résistifs séparés, montés en série (3), entre lesquels se trouvent des points de contact discrets (4) avec l'électrolyte de référence.

4. Chaîne de mesure à une tige selon l'une quelconque des revendications 1 à 3, **caractérisé en ce que** l'élément résistif (3, 8) est fortement résistant et présente une résistance plus grande par rapport à l'électrolyte.

5. Chaîne de mesure à une tige selon l'une quelconque des revendications 1 à 3, **caractérisé en ce que** l'élément résistif (8) présente au moins deux structures conductrices, au moins une desquelles s'étend sur toute la longueur de la chambre d'électrolyte de référence pouvant être remplie de l'électrolyte de référence, dans lequel la résistance de l'élément résistif diffère à peine ou pas du tout de la résistance de l'électrolyte ou est plus basse que celle-ci.

6. Chaîne de mesure à une tige selon l'une quelconque des revendications 1 à 5, **caractérisé en ce que** l'autre électrode de dérivation interne (5) est formée en tant que seconde électrode de référence à polarisation stable qui, d'une part, sert de contre-électrode pour la mesure de la résistance de l'élément résistif et, d'autre part, de masse interne et également, lorsqu'elle est réalisée en tant qu'électrode de seconde espèce à polarisation stable, pour surveiller la première électrode de référence.

7. Chaîne de mesure à une tige selon l'une quelconque des revendications 1 à 6, **caractérisé en ce que** l'électrode de dérivation interne (5) n'est en contact avec l'électrolyte (14) qu'à son extrémité basse.

8. Chaîne de mesure à une tige selon l'une quelconque des revendications 1 à 7, **caractérisé en ce que** l'élément résistif ou les éléments résistifs et les électrodes de dérivation correspondantes se situent sur la surface de la demi-cellule à membrane de verre ou sur un substrat cylindrique (1) l'entourant.

9. Chaîne de mesure à une tige selon l'une quelconque des revendications 1 à 8, **caractérisé en ce qu'**une pression interne plus élevée est appliquée à l'électrolyte de référence par rapport à l'article mesuré.

10. Système de mesure comportant une chaîne de mesure du pH potentiométrique à une tige selon l'une quelconque des revendications 1 à 9 ainsi que des éléments électroniques qui,
a) le cas échéant, mesurent, digitalisent, enregistrent et évaluent de manière continue ou à certaines intervalles la résistance ohmique de la partie non mouillée par l'électrolyte de référence de l'un ou des plusieurs éléments résistifs; et
b) le cas échéant, saisissent et évaluent la résistance entre l'électrode de dérivation interne et la dérivation de la demi-cellule à membrane de verre parallèlement aux autres fonctions de l'électrode de dérivation interne pour déterminer la résistance de verre ; et/ou
c) le cas échéant, saisissent et évaluent la différence de potentiel entre l'électrode de référence de la demi-cellule de référence et électrode de dérivation interne, lorsque cette dernière est formée en tant que seconde électrode de référence à polarisation stable, parallèlement aux autres fonctions de l'électrode de dérivation interne pour vérifier l'électrode de référence ; et/ou
d) le cas échéant, mesurent, digitalisent, enregistrent et transmettent la différence de potentiel ente l'électrode de référence de la demi-cellule de référence et la dérivation de la demi-cellule à membrane de verre pour déterminer la valeur pH.

11. Système de mesure selon la revendication 10, **caractérisé en ce que** les éléments électroniques sont choisis séparément ou en combinaison parmi des amplificateurs opérationnels, convertisseurs A/N, microprocesseurs, modules de mémoire ainsi que des dispositifs pour la séparation galvanique des systèmes de mesure électronique des interfaces pour une transmission de signaux et d'énergie digitale et/ou analogue.

12. Système de mesure selon la revendication 10 ou 11, **caractérisé en ce qu'**il présente les éléments électroniques dans une tête sur la chaîne de mesure à une tige.

13. Utilisation d'au moins un élément résistif ayant une résistance électrique donnée en combinaison avec au moins une autre électrode de dérivation interne dans une demi-cellule de référence dans un dispositif conformément à l'une des revendications 1 à 12, dans lequel l'élément résistif s'étend sur toute la longueur de la chambre de l'électrolyte de référence pouvant être remplie de l'électrolyte de référence, et dans lequel l'élément résistif et l'élément de dérivation sont en permanence en contact électrique avec l'électrolyte de référence.

14. Utilisation selon la revendication 13 pour la mesure effectuée de manière continue ou à intervalles de temps de la résistance électrique de la partie non mouillée par l'électrolyte de référence de l'élément résistif et pour la comparaison avec la résistance électrique donnée de l'élément de sortie.

15. Utilisation selon la revendication 13 pour la mesure effectuée de manière continue ou à intervalles de la résistance de l'électrolyte de référence et pour la comparaison avec la résistance de sortie de l'électrolyte.
